# EUROPÄISCHE PATENTANMELDUNG

(11) **EP 0 884 132 A1**
(43) Veröffentlichungstag der Anmeldung: **16.12.1998**
(21) Anmeldenummer: 98110187.6
(22) Anmeldetag: 04.06.1998
(51) Int. Cl.: B23Q 7/04, B23Q 16/00

(54) **Handhabungsvorrichtung**

(30) Priorität: 10.06.1997 CH 1397/97
(71) Anmelder: K.R. PFIFFNER AG, 8801 Thalwil (CH)
(72) Erfinder: Pfiffner, Karl Richard, 8135 Langnau am Albis (CH)
(74) Vertreter: EGLI-EUROPEAN PATENT ATTORNEYS

(57) **Zusammenfassung**

Um eine Handhabungsvorrichtung, welche mit einem Aktuator zum Erfassen eines Werkstückes sowie mit mindestens zwei mit einem Antrieb wirkverbundenen Bewegungsachsen versehen ist, durch die der Aktuator in unterschiedlichen Positionen eines Koordinatensystems positionierbar ist,konstruktiv relativ unaufwendig ausbilden und trotzdem vielseitig einsetzen zu können, wird die Ausbildung eines Handhabungssystems vorgeschlagen, bei dem die Handhabungsvorrichtung auf mindestens einen Werkstückträger, welcher mit mehreren Werkstückaufnahmen versehen und an welchen jeweils ein Werkstück anordenbar ist, so abgestimmt ist, dass die Handhabungsvorrichtung (1) dazu mit Positionierungsmitteln versehen ist, durch welche ein Referenzpunkt der Handhabungsvorrichtung (1) durch die Bewegungsachsen nur in fest vorgegebenen Positionen anordenbar ist, so dass zumindest in einigen dieser Positionen der Referenzpunkt auf jeweils einer Referenzachse von einer der Aufnahmen (31, 32, 33, 34, 35, 36, 37, 38) liegt.

## Beschreibung

Die Erfindung betrifft ein Handhabungssystem, das mehrere Handhabungsvorrichtungen und zumindest einen Werkstückträger zur Aufnahme von Werkstücken umfasst. Die Handhabungsvorrichtungen des Systems weisen jeweils einen Aktuator zur Montage, zum Fügen und/oder Bearbeiten eines Werkstückes auf, beispielsweise mit einem Greifer, und sind mindestens mit zwei, mit einem Antrieb wirkverbundenen, Bewegungsachsen versehen, durch die der jeweilige Aktuator in unterschiedlichen Positionen eines Koordinatensystems positionierbar ist.

Zur Handhabung und insbesondere zur Montage von Einzelteilen zu einem Produkt oder einer Baugruppe werden vielfach Handhabungsautomaten oder Industrieroboter eingesetzt. Dazu ist üblicherweise ein Aktuator am Handhabungsautomaten befestigt. Mit z.B. einem Greifer kann das Werkstück gegriffen, gegebenenfalls umorientiert, über eine Strecke transportiert und nachfolgend an einer bestimmten Stelle positioniert werden. Oftmals können als Aktuatoren auch Werkzeuge, beispielsweise zur Schleifbearbeitung, befestigt werden.

Die meisten der vorbekannten Handhabungsvorrichtungen basieren auf dem Gedanken, dass sie möglichst universell einsetzbar sein müssen. Aus diesem Grund weisen die Vorrichtungen üblicherweise eine frei programmierbare Steuerung auf, mit der ein Greifer innerhalb des Verfahrbereiches der Handhabungsvorrichtung jede beliebige Position anfahren kann. Die Handhabungsvorrichtungen sind dazu mit entsprechenden NC-Achsen versehen. Um mit einer solchen Handhabungsvorrichtung Montageoperationen ausführen zu können, wird in der Regel ein sogenanntes "Teach-In"-Verfahren durchgeführt, bei dem die einzelnen Montagepunkte manuell angefahren und anschliessend abgespeichert werden.

Zwar können solche vorbekannten Handhabungsvorrichtungen tatsächlich für unterschiedliche Anwendungsfälle eingesetzt werden. Es hat sich jedoch als nachteilig erwiesen, dass dazu ein verhältnismässig grosser Umrüstungsaufwand erforderlich ist. Insbesondere hat sich das Teach-In-Verfahren als verhältnismässig zeitaufwendig gezeigt. Ausserdem muss für jeden neuen Anwendungsfall eine oder mehrere neue Werkstückaufnahmen konstruiert, gefertigt und in die Handhabungsvorrichtung integriert werden.

Zum anderen weisen die vorbekannten Handhabungsvorrichtungen einige Funktionen bzw. Möglichkeiten auf, die für viele konkrete Anwendungsfälle gar nicht benötigt werden. Diese funktionale "Überdimensionierung" erhöht den konstruktiven Aufwand und damit die Kosten derartiger Handhabungsvorrichtungen mehr als notwendig.

Um unter anderem auch diese Nachteile zu vermeiden, sind bereits Handhabungsvorrichtungen bekannt geworden, die konstruktiv an einen konkreten Anwendungsfall angepasst sind. Solche Anpassungen können beispielsweise darin bestehen, dass die Handhabungsvorrichtung mit dem Aktuator lediglich eine einzige Bewegung ausführen kann. Dies hat jedoch den Nachteil, dass der Wiederverwendungsgrad solcher Vorrichtungen für andere Anwendungen relativ gering ist, wenn eine Wiederverwendung überhaupt möglich ist.

Auf der Herstellerseite haben sowohl die zuvor erörterten frei programmierbaren und universell einsetzbaren, als auch die anwendungsspezifisch angepassten Handhabungsvorrichtungen den Nachteil, dass sie einen erheblichen konstruktiven Aufwand mit sich bringen.

Der Erfindung liegt deshalb die Aufgabe zugrunde, eine Möglichkeit zu schaffen, durch die eine Handhabungsvorrichtung mit möglichst geringem Aufwand für unterschiedliche Anwendungsfälle, insbesondere für die Montage unterschiedlicher Produkte, einsetzbar ist und trotzdem konstruktiv relativ unaufwendig aufgebaut ist. Ausserdem soll mit der Erfindung ein Handhabungssystem mit mehreren Handhabungsvorrichtungen geschaffen werden, die möglichst universell einsetzbar sind und trotzdem mit geringem konstruktiven Aufwand erstellt werden können.

Die Aufgabe wird durch ein erfindungsgemässes Handhabungssystem gelöst, das mehrere, baulich unterschiedliche Handhabungsvorrichtungen aufweist, welche jeweils mit einem Aktuator zur Montage und/oder Bearbeitung eines Werkstückes sowie mit mindestens zwei, vorzugsweise drei, mit einem Antrieb wirkverbundenen Bewegungsachsen versehen sind, wodurch der Aktuator in unterschiedlichen Positionen eines Koordinatensystems positionierbar ist, das ausserdem mindestens einen Werkstückträger aufweist, der mit mehreren Werkstückaufnahmen versehen ist, an der jeweils ein Werkstück anordenbar ist, wobei die Positionen der einzelnen Werkstückaufnahmen auf dem jeweiligen Werkstückträger zueinander fest vorgegeben sind, die Handhabungsvorrichtungen und der zumindest eine Werkstückträger aufeinander abgestimmt sind, jede Handhabungsvorrichtung dazu mit Positionierungsmitteln versehen ist, durch welche ein Referenzpunkt der jeweiligen Handhabungsvorrichtung durch die Bewegungsachsen nur in vorzugsweise unveränderlich fest vorgegebenen Positionen anordenbar ist, so dass zumindest in einigen dieser Positionen der Referenzpunkt auf jeweils einer Referenzachse von einer der Werkstückaufnahmen liegt, zumindest einige Positionen jedes Aktuators jeweils eine Punktmatrix, vorzugsweise eine dreidimensionale Punktmatrix, bilden und die Punktmatrizen der einzelnen Handhabungsvorrichtungen zumindest teilweise identisch sind, wodurch jede der Handhabungsvorrichtungen zumindest über einige der Werkstückaufnahmen des mindestens einen Werkstückträgers positionierbar ist.

Die Aufgabe wird ausserdem durch eine Handhabungsvorrichtung gemäss Anspruch 13 gelöst.

Bei erfindungsgemässen Handhabungsvorrichtungen sollte der Aktuator nur bestimmte, in einem Koordinatensystem fest vorgegebene, Positionen einnehmen können. Dies reduziert zum einen den konstruktiven Aufwand der Antriebe, aber auch der Steuerung erheblich. Um trotzdem einen hohen Wiederverwendungsgrad zu erreichen, werden gemäss der Erfindung mehrere Handhabungsvorrichtungen und zumindest ein Werkstückträger, in dem zu montierende Werkstücke angeordnet sind, als System gesehen. Dies bedeutet, dass zu jeder erfindungsgemässen Handhabungsvorrichtung zumindest ein Werkstückträger gehört. Der Werkstückträger kann dabei so angeordnet werden, dass die einzelnen Aufnahmen exakt in dem Raster positioniert sind, welches durch die von der Handhabungsvorrichtung anfahrbaren Positionen gebildet wird. Diese Positionen werden an der Handhabungsvorrichtung bereits von dem Hersteller - vorzugsweise unveränderlich - eingestellt. Durch diese Abstimmung ist für den Anwender gewährleistet, dass das Handhabungssystem ohne wesentliche Umbauarbeiten und ohne umfangreiche Programmierarbeiten auch für eine neue Anwendung verwendbar ist. Der Anwender muss lediglich die Anzahl und die Reihenfolge der anzufahrenden Positionen sowie die dort auszuführenden Funktionen, beispielsweise des Greifers, bestimmen. Hierdurch lassen sich besonders einfach und schnell Montage- und Fügeabläufe planen, vorbereiten und durchführen, wobei unter den Begriffen 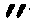 Montage 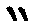 und 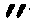 Fügen 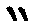 zumindest die in der DIN 8593 angeführten Verfahren zu verstehen sind.

Durch eine derartige standardisierte Ausbildung von Handhabungsvorrichtungen und den dazugehörenden Werkstückaufnahmen ist für den Anwender, in Bezug auf die Einsatzmöglichkeiten erfindungsgemässer Handhabungssysteme, eine grosse Produkt- und Variantenflexibiltät gegeben. Ausserdem ist dadurch auch die Vergabe von Auftragsarbeiten, beispielsweise bei Kapazitätsengpässen, mit weniger Aufwand als bisher möglich. Ein Auftraggeber kann bereits bei der Auftragserteilung die für die Abwicklung des Auftrages erforderlichen und bei ihm bereits vorhandenen Unterlagen der Arbeitsvorbereitung seinem Auftragnehmer zur Verfügung stellen. Diese Arbeitspläne, Steuerungsprogramme u.ä. können beim Auftragnehmer, da er ein gleiches standardisiertes Handhabungssystem verwendet, unmittelbar eingesetzt werden. Durch die universelle Verwendbarkeit des erfindungsgemässen Handhabungssystems können sich Auftragnehmer mit einem solchen Handhabungssystem ausrüsten, ohne sich dadurch an einen bestimmten Auftrag oder Auftraggeber zu binden.

Aber auch für den Hersteller des Handhabungssystems weist das erfindungsgemässe Systemkonzept wesentliche Vorteile auf. So ist es möglich, dass ein Hersteller sein Programm vollständig modular aufbaut. Dies ermöglicht einerseits die Zusammenstellung von baugleich konzipierten und ausgelegten Handhabungsmodulen, so dass verschiedene Maschinentypen für unterschiedliche Anwendungen mit den standardisierten Handhabungsmodulen und Werkstückträger konfiguriert werden können. Ein solches Handhabungsmodul kann beispielsweise eine Baugruppe der erfindungsgemässen Handhabungsvorrichtungen sein, welche zumindest eine der Bewegungsachsen X, Y und Z umfasst. Die Handhabungsmodule können dann beispielsweise mit unterschiedlichen Aktuatoren kombiniert werden.

Andererseits können durch einen modularen Aufbau mit geringem Aufwand auch Handhabungssysteme mit baulich unterschiedlichen Handhabungsmodulen bzw. Handhabungsvorrichtungen gebildet werden. Ein baulicher Unterschied zwischen Handhabungsvorrichtungen kann beispielsweise in unterschiedlichen Antriebsarten der einzelnen Achsen, unterschiedlicher Belastbarkeit der Handhabungsvorrichtungen oder auch Ausrüstung mit unterschiedlichen Aktuatoren bestehen. Selbstverständlich können solche Unterschiede auch in jedem anderen für den Einsatz der Handhabungsvorrichtungen relevanten Aspekt liegen. Solche zu einem System gehörenden Handhabungsvorrichtungen sollten jedoch matrixförmige Punkteraster der anfahrbaren Positionen aufweisen, die zumindest teilweise - vorzugsweise jedoch vollständig - übereinstimmen. Durch die mit dem modularen Aufbau verbundene Reduzierung der für verschiedene Modelle erforderlichen Einzelteile und Aufwände für das Einrichten können der konstruktive Aufwand, die Herstellungskosten sowie die Inbetriebnahmezeit für einzelne Maschinen erheblich reduziert werden.

Im Hinblick auf den modularen Aufbau eines erfindungsgemässen Handhabungssystems hat es sich als zweckmässig erwiesen, wenn baulich unterschiedliche Handhabungsvorrichtungen ein eine Art 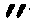 Grundmatrix 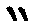 an gemeinsam anfahrbaren Positionen aufweisen, die von allen Handhabungsvorrichtungen anfahrbar sind. Innerhalb des Handhabungssystems können Handhabungsvorrichtungen vorhanden sein, die nur die Positionen der Grundmatrix anfahren können und andere Handhabungsvorrichtungen, die in weiteren Positionen als der Grundmatrix angeordnet werden können.

In bevorzugten Ausführungsformen der Erfindung weist die Handhabungsvorrichtung in einer X-Y Ebene mehrere, bevorzugt mindestens vier, Positionen auf, die von ihr angefahren werden können. In bezug auf eine Z-Achse, d.h. in vertikaler Richtung, kann das mit einem Greifer versehbare Ende des Aktuators in zwei Endlagen, nämlich in eine obere und eine untere Endlage, überführt werden. Dadurch ergeben sich in einem kartesischen Koordinatensystem mindestens acht Positionen, in denen der Manipulatorarm positioniert werden kann. Es ist dabei bevorzugt, dass sich mindestens eine dieser Positionen ausserhalb des Werkstückträgers befindet.

Gemäss einer weiteren zweckmässigen Ausführungsform der Erfindung werden mehrere Handhabungsvorrichtungen miteinander verkettet, beispielsweise in Form einer Längstaktanlage. Sind erfindungsgemässe Handhabungsvorrichtungen zu einer bevorzugten Rundtaktanlage zusammengeschaltet, so können diese um eine als Schaltteller ausgebildete Transfereinrichtung herum angeordnet sein.

Weitere bevorzugte Ausgestaltungen der Erfindung ergeben sich aus den abhängigen Ansprüchen.

Die Erfindung wird anhand von in den Figuren schematisch dargestellten Ausführungsbeispielen näher erläutert; es zeigen:
- Fig. 1: eine Seitenansicht einer Handhabungsvorrichtung und eines Werkstückträgers von einem erfindungsgemässen Handhabungssystem;
- Fig. 2a) - 2c): eine Draufsicht auf den Werkstückträger aus Fig. 1 sowie zwei Schnittdarstellungen von dieser;
- Fig. 3: eine Draufsicht auf eine erfindungsgemässe Rundtaktanlage.

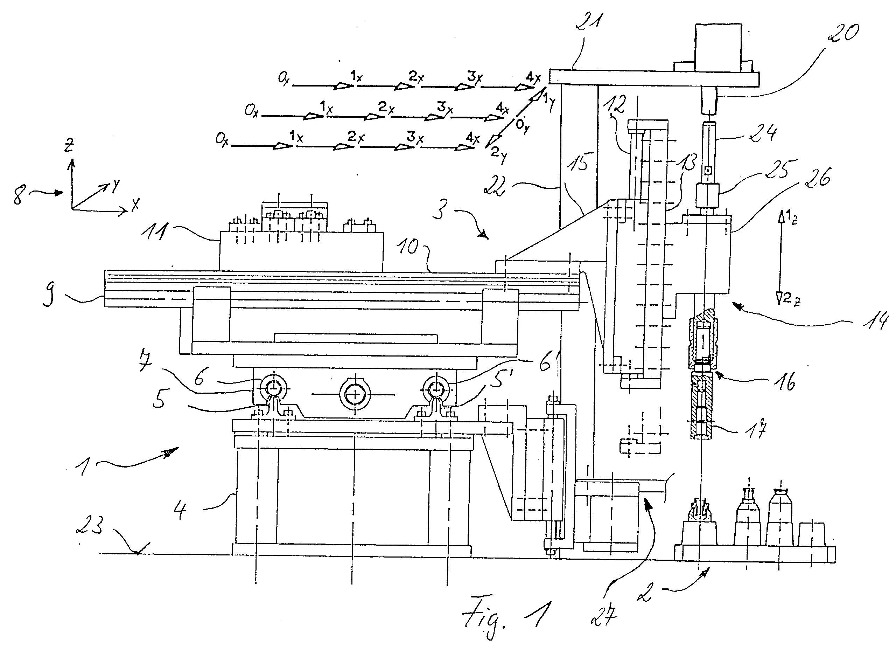

Das in Fig. 1 gezeigte Handhabungssystem weist eine dargestellte Handhabungsvorrichtung 1, eine oder mehrere nicht gezeigte weitere Handhabungsvorrichtungen sowie einen Werkstückträger 2 auf. Die Handhabungsvorrichtung 1 selbst ist mit einem Handhabungsmodul 3 versehen, das auf einem auf Gestell 4 angeordnet ist.

Auf dem Gestell 4 sind zwei verzahnte Führungsschienen 5, 5' parallel zueinander angeordnet. In die Führungsschienen 5, 5' greift jeweils eine Kugelumlaufspindel 6, 6' ein. Die beiden Kugelumlaufspindeln 6, 6' sind ebenfalls parallel zueinander ausgerichtet und an einer Lagerplatte 7 befestigt. Ein elektrischer Antrieb der beiden in Y-Richtung eines kartesischen Koordinatensystems 8 translatorisch bewegbaren Spindeln 6, 6' ist in Fig. 1 nicht dargestellt.

Auf der Lagerplatte 7 befindet sich ein Aufbau, auf dem eine weitere Führungsschiene 9 befestigt ist, deren Längsachse einer X-Achse des Koordinatensystems 8 entspricht. Auf der Führungsschiene ist ein Schlitten 10 verfahrbar angeordnet, an dem eine Ventilinsel 11, ein Aktuator 14 sowie dessen Lagerkörper 15 und ein nicht dargestellter pneumatischer Antrieb befestigt ist.

Der Aktuator 14 ist durch den Antrieb über eine Z-Achse 12 in Z-Richtung des Koordinatensystems verfahrbar und in einer oberen und unteren Endlage überführ- und arretierbar. Ein Halteflansch 13 des Aktuators 14 ist mit einem in Fig. 1 durch horizontale gestrichelte Linien angedeutetes Bohrbild versehen. Durch das Bohrbild kann der Aktuator 14 in unterschiedlichen Höhen gegenüber dem Lagerkörper 15 befestigt werden. An einem unteren Ende des Aktuators 14 ist durch eine Kupplungseinrichtung 16 ein pneumatisch betätigbares Werkzeug 17 lös- und auswechselbar befestigt.

Im dargestellten Ausführungsbeispiel ist der Aktuator 14, ausser durch die Z-Achse 12 selbst, auch durch einen in Z-Richtung beweglichen Eindrückzylinder 20 verfahrbar. Der Eindrückzylinder 20 ist auf einer Seite eines Abstützringes 21 befestigt. Diametral gegenüber liegt der Abstützring 21 auf einer Befestigungssäule 22 auf, die - ebenso wie der Werkstückträger 2 und das Gestell 4 - auf einer Grundfläche 23 angeordnet ist. Der beispielsweise hydraulisch oder pneumatisch angetriebene, Eindrückzylinder 20 drückt auf eine Verlängerungsachse 24 des Werkzeuges 17. Auf der Verlängerungsachse 24 ist ein ringförmiger Anschlag 25 angeordnet, der durch Anlage gegen eine Aufnahme 26 der Verlängerungsachse 24 die Verfahrbarkeit des Eindrückzylinders 20 nach unten begrenzt. In Z-Richtung nach oben wird die Verfahrbarkeit des Zylinders durch die obere Endlage von dessen Kolben begrenzt. Somit ist das Werkzeug 17 durch den Eindrückzylinder 20 in Z-Richtung in zwei weitere Endlagen positionierbar.

Die Bewegung des Eindrückzylinders 20 kann vor allem zur Ausführung der eigentlichen Füge- bzw. Bearbeitungsbewegung genutzt werden, während die Bewegung der Z-Achse 12 in erster Linie zur Vorpositionierung des Werkzeuges 17 dient. Durch die Anordnung des Eindrückzylinders 20 am Abstützring 21 und der Befestigungssäule 22 kann insbesondere bei Fügebewegungen oder sonstigen Handhabungsvorgängen, die eine gewisse Krafteinwirkung benötigen, ein vorteilhafter Kraftfluss erreicht werden. Der aus der gezeigten Anordnung resultierende Kraftfluss verläuft vom Eindrückzylinder 20 über die Verlängerungsachse 24, das Werkzeug 17, den Werkstückträger 2, die Bodenfläche 23, die Befestigungssäule 22 und den Abstützring 21 zurück zum Eindrückzylinder 20. Der Kraftfluss ist somit geschlossen. Aufgrund dieser Anordnung belastet die vom Eindrückzylinder 20 auf ein Werkstück wirkende Kraft nicht die X-, Y- und Z-Achse und führt auch nicht zu Verformungen der Handhabungsvorrichtung 1.

Am Gestell 4 ist ein nur teilweise dargestellter Niederhalter 27 befestigt, der ebenfalls in Z-Richtung beweglich ist. Mit dem Niederhalter 27 kann ein Werkstück in der Werkstückaufnahme gehalten werden. Ausserdem könnte der Niederhalter auch mit einem Greifer oder einer Fügehilfe versehen sein. Eine solche Fügehilfe könnte für eine O-Ring-Montage beispielsweise ein Konus sein, mit dem die einzelnen O-Ringe für die Montage vordeformiert werden.

In Fig. 1 ist durch Pfeile und Positionsnummern stark schematisiert ein dreidimensionales matrixförmiges Punkteraster angedeutet, das den einzelnen von dem Referenzpunkt des Aktuators 14 bzw. von dem Werkzeuges 17 einnehmbaren Positionen und Vorschubwegen entspricht. Wie zu erkennen ist, kann das Werkzeug in X-Richtung in fünf verschiedenen Positionen (0ₓ - 4ₓ> dauerhaft angeordnet werden. Dabei ist 0ₓ die X-Koordinate von neutralen Positionen, die vor dem Werkstückträger liegen. In bezug auf die Y-Achse kann das Werkzeug in drei Stellungen 0_{y}, 1_{y} und 2_{y} überführt werden. In Z-Richtung ergibt sich durch die beiden von der Z-Achse 12 erzeugten Endlagen des Referenzpunktes des Aktuators dessen Stellungen 1_{z} und 2_{z}. Somit wird durch die fünf Stellungen der X-Achse, der drei Stellungen der Y-Achse sowie der beiden Stellungen der Z-Achse ein dreidimensionales räumliches Raster aufgespannt. Das Werkzeug bzw. der Referenzpunkt ist dabei so positionierbar, dass er jeden Punkt (0ₓ - 4ₓ, 0_{y} -2_{y}, 1_{z} - 2_{z}) des matrixförmigen Rasters einnehmen kann. Um von einer Position zu einer anderen zu verfahren, können die X-, Y- und Z-Achsen sowohl gleichzeitig als auch einzeln angetrieben werden.

Um diese endliche Anzahl an fest vorgegebenen Positionen zu erzeugen, weisen die Bewegungsachsen der Handhabungsvorrichtung 1 Positionierungsmittel auf, durch die eine Vorschubbewegung der entsprechenden Achse an der vorgegebenen Stelle gestoppt wird. Der Antrieb der X-Achse ist dazu als Schrittmotor ausgebildet. Bereits bei der Montage des Handhabungsmoduls wird die Steuerung des Schrittmotors so eingestellt, dass der Motor jeweils bei einer bestimmten Anzahl von Schritten stoppt. Die Anzahl der Schritte entspricht dabei den zwischen den Stellungen 0ₓ - 1ₓ, 1ₓ - 2ₓ, .... - 4ₓ jeweils zurückzulegenden Vorschüben. Die Positionierungsmittel sind somit im Falle der X-Achse die jeweils vorgegebene Anzahl an Schritten des Elektromotors.

Die pneumatische Y-Achse weist als Positionierungsmittel zwei nicht dargestellte Endanschläge (Hub des Pneumatikkolbens) sowie einen ebenfalls nicht dargestellten Zwischenanschlag auf. Da die Y-Achse direkt von einer Endlage in die andere positionierbar sein soll, ist der Zwischenanschlag in den Pneumatikzylinder der Y-Achse wahlweise zuschaltbar. Ebenso wie bei der Y-Achse dient auch bei der Z-Achse der den Hub begrenzende Pneumatikzylinder als Positionierungsmittel.

Selbstverständlich könnten in anderen Ausführungsformen die Positionierungsmittel und Antriebe der einzelnen zuvor erläuterten Achsen auch miteinander vertauscht sein. Ebenso könnten auch andere Antriebskonzepte und Positionierungsmittel als die zuvor beschriebenen Anwendung finden. So könnte beispielsweise eine Achse als numerisch gesteuerte Achse ausgebildet sein, wobei durch den Hersteller der Handhabungsvorrichtung die Programmierung der NC-Achse insoweit vorgegeben bzw. eingeschränkt ist, als nur fest vorgegebene Stellungen auf der entsprechenden Achse ausgewählt werden können. Mit diesen Varianten an unterschiedlichen Handhabungsvorrichtungen kann beispielsweise das Handhabungssystem ergänzt werden.

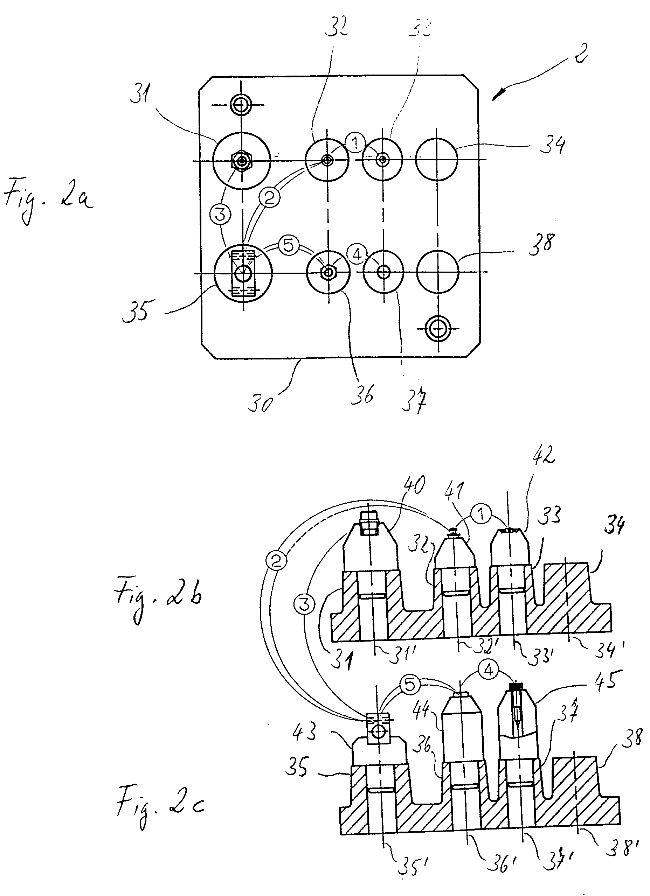

Wie der Fig. 1 sowie den Fig. 2a, 2b und 2c entnommen werden kann, ist der Werkstückträger 2 als eine im wesentlichen rechteckige Platte 30 ausgebildet, die mit zwei im wesentlichen identischen Reihen von jeweils vier Werkstückaufnahmen 31, 32, 33, 34, 35, 36, 37, 38 versehen ist. Die Werkstückaufnahmen 31 - 38 sind mit der Platte 30 jeweils einstückig verbunden. Die in Z-Richtung Jeweils gleich hohen und im wesentlichen zylindrischen Aufnahmen 31 - 38 sind auf dem Werkstückträger 2 so angeordnet, dass ihre vertikalen Symmetrieachsen 31' - 38' - bei entsprechender Positionierung des Werkstückträgers 2 gegenüber der Handhabungsvorrichtung - exakt im Raster der X-Y Ebene der Handhabungsvorrichtung liegen. Mit anderen Worten, der Aktuator 14 kann gegenüber jeder Aufnahme 31 - 38 so positioniert werden, dass sich dessen Referenzpunkt in einer definierten Position gegenüber einer Referenzachse, nämlich der jeweiligen Symmetrieachse 31' - 38' der entsprechenden Aufnahme, befindet. Im dargestellten Ausführungsbeispiel befindet sich der Referenzpunkt des Aktuators im Bereich der Kupplungseinrichtung 16. Die definierte Position des Aktuators 14 besteht darin, dass dessen Referenzpunkt jeweils auf einer bestimmten Stelle der Symmetrieachsen 31'- 38' angeordnet ist. Die Aufnahmen 31 - 34 der ersten Reihe entsprechen somit in der X-Y-Ebene des Koordinatensystems den Rasterpunkten (1ₓ-4ₓ, 1_{y}) , während die Aufnahmen der zweiten Reihe auf den Rasterpunkten (1ₓ-4ₓ, 2_{y}) positioniert sind. Wie insbesondere den Fig. 1 und 2a zu entnehmen ist, können Aufnahmen des Werkstückträgers - und somit auch die Positionen des Aktuators - in X-Richtung unterschiedliche Abstände zueinander aufweisen. Selbstverständlich könnten in anderen Ausführungsformen der Erfindung die Aufnahmen 31 - 38 auch in bezug auf andere Raumrichtungen in ungleichmässigen Abständen zueiander angeordnet sein.

Um so wenig Teile als möglich an den konkreten Anwendungsfall anpassen zu müssen, sind die Aufnahmen 31 - 33, 35 - 37 als Hohlzylinder mit jeweils gleichem Innendurchmesser ausgebildet, in die schnell auswechselbare Einsätze 40, 41, 42, 43, 44, 45 passgenau eingefügt werden können. Die Einsätze 40 - 45, an welchen die zu montierenden Werkstücke angeordnet werden, sind so ausgelegt und dimensioniert, dass sie eine Montage an den best vorgegebenen Montage- und Bearbeitungspunkten erlauben. So kann insbesondere durch die Höhe der Einsätze 40 - 45 (in Z-Richtung) sowie der Länge des Werkzeuges (ebenfalls in Z-Richtung gesehen) trotz des standardisierten Hubes der Z-Achse der Handhabungsvorrichtung 1 die Stelle, an der das Werkzeug ein Werkstück erfasst, anwendungsspezifisch ausgewählt werden. Selbstverständlich ist es auch möglich, die Aufnahmen direkt und ohne zusätzliche Einsätze für die Anordnung der zu handhabenden Werkstücke zu verwenden.

In den Fig. 2a - 2c ist durch die in Kreisen angeordneten Bezugszeichen 1 - 5 sowie durch Pfeile die Reihenfolge der Montage der einzelnen Elemente eines Produktes, nämlich eines Ventils, angedeutet. Dazu wird zuerst ein in der Aufnahme 33 angeordnete Mutter von dem Werkzeug 17 aufgenommen. Dazu wird der Aktuator in die Position (3ₓ, 1_{y}, 2_{z}) gebracht. Nachdem das Werkzeug 17 bei zunächst konstanten X- und Y-Koordinaten in die obere Z-Endlage (1_{z}) verfahren wurde, wird es in die Position (2ₓ, 1_{y},1_{z}) über die Aufnahme 32 gebracht. Durch Absenken des Werkzeuges wird ein Fügeteil in das in der Aufnahme vorpositionierte Basisteil eingefügt. Dies entspricht dem in den Fig. 2a - 2c mit "1" gekennzeichnetem Montageschritt. Anschliessend werden die so montierten Bauteile an einen in der Aufnahme 35 (1ₓ, 2_{y}) gehaltenen Grundkörper befestigt (Montageschritt "2"). Danach werden in gleicher Weise die weiteren Montageschritte "3", "4" und "5" ausgeführt, indem der Greifer jeweils über der entsprechenden Aufnahme positioniert und abgesenkt wird, das Bauteil aufnimmt, wieder nach oben verfährt, über der nächsten Aufnahme positioniert und zur Montage des Bauteils bzw. der Bauteilgruppe dort abgesenkt wird.

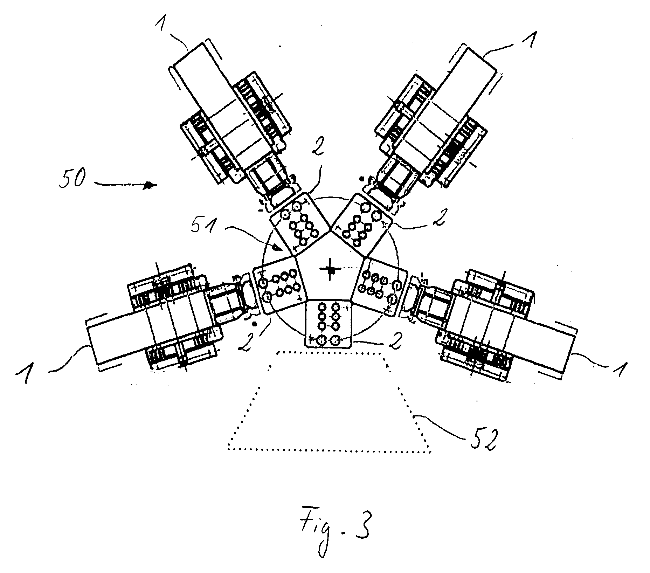

In Fig. 3 ist eine erfindungsgemasse Montageanlage gezeigt, bei der mehrere der in Fig. 1 dargestellten Handhabungssysteme zu einer Rundtaktanlage 50 zusammengestellt sind. Mit der Rundtaktanlage wird ein nicht näher dargestelltes Produkt montiert, wobei dazu eine grössere Anzahl an Montageschritten erforderlich ist, als jede einzelne der Handhabungsvorrichtungen 1 ausführen kann. Vor jeder Handhabungsvorrichtung 1 ist jeweils einer der an einem zentralen Rundtaktschaltteller 51 befestigten Werkstückträger 2 so positionierbar, dass sich die Aufnahmen in dem Raster der entsprechenden Handhabungsvorrichtung 1 befindet. Die im Ausführungsbeispiel dargestellten fünf Werkstückträger 2 sind gleichmässig am Umfang des Schalttellers 51 verteilt. Dabei ist jeweils einer der Werkstückträger 2 vor einer Be- und Entladestation 52 anordenbar, an welcher der entsprechende Werkstückträger 2 manuell beschickt werden kann. Zur Koordinierung der Montageoperationen ist die Rundtaktanlage mit einer übergeordneten zentralen Steuerung (nicht dargestellt) versehen, die auch die einzelnen Steuerungen der Handhabungsvorrichtungen 1 und des Schalttellers 51 kontrolliert.

## Patentansprüche

1. Handhabungssystem, umfassend
mehrere, baulich unterschiedliche Handhabungsvorrichtungen, welche jeweils mit einem Aktuator zur Montage, zum Fügen und/oder zum Bearbeiten eines Werkstückes, sowie mit mindestens zwei, vorzugsweise drei, mit einem Antrieb wirkverbundenen Bewegungsachsen versehen sind, wodurch der Aktuator in unterschiedlichen Positionen eines Koordinatensystems positionierbar ist,
mindestens einen Werkstückträger, der mit mehreren Werkstückaufnahmen versehen ist, an der jeweils ein Werkstück anordenbar ist, wobei die Positionen der einzelnen Werkstückaufnahmen auf dem jeweiligen Werkstückträger - vorzugsweise zumindest in Richtung von mindestens einer der Bewegungsachsen - zueinander fest vorgegeben sind,
die Handhabungsvorrichtungen (1) und der zumindest eine Werkstückträger (2) aufeinander abgestimmt sind,
jede Handhabungsvorrichtung (1) dazu mit Positionierungsmitteln versehen ist, durch welche ein Referenzpunkt der jeweiligen Handhabungsvorrichtung (1) durch die Bewegungsachsen nur in vorzugsweise unveränderlich fest vorgegebenen Positionen anordenbar ist, so dass zumindest in einigen dieser Positionen der Referenzpunkt auf jeweils einer Referenzachse von einer der Werkstückaufnahmen (31, 32, 33, 34, 35, 36, 37, 38) liegt,
zumindest einige Positionen jedes Aktuators jeweils eine Punktmatrix, vorzugsweise eine dreidimensionale Punktmatrix, bilden und die Punktmatrizen der einzelnen Handhabungsvorrichtungen zumindest teilweise identisch sind, wodurch jede der Handhabungsvorrichtungen zumindest über einige der Werkstückaufnahmen des mindestens einen Werkstückträgers positionierbar ist.

2. Handhabungssystem nach Anspruch 1, dadurch gekennzeichnet, dass die Punktmatrizen von baulich unterschiedlichen Handhabungsvorrichtungen im wesentlichen identisch sind, so dass diese Handhabungsvorrichtungen über Aufnahmen der gleichen bzw. identischer Werkstückaufnahmen in gleicher Weise positionierbar sind.

3. Handhabungssystem nach einem oder beiden der vorhergehenden Ansprüche, dadurch gekennzeichnet, dass der bauliche Unterschied zwischen zumindest zwei Handhabungsvorrichtungen in der Anzahl anfahrbarer Positionen liegt, wobei sämtliche Positionen der Handhabungsvorrichtung mit der geringeren Anzahl an anfahrbaren Positionen auch von der Handhabungsvorrichtung mit der grösseren Anzahl an anfahrbaren Positionen einnehmbar sind.

4. Handhabungssystem nach einem oder mehreren der vorhergehenden Ansprüche, dadurch gekennzeichnet, dass die Referenzachsen Symmetrieachsen (31'- 38') der Aufnahmen (31 - 38) sind.

5. Handhabungssystem nach einem oder mehreren der vorhergehenden Ansprüche, dadurch gekennzeichnet, dass die Symmetrieachsen (31'- 38') parallel zueinander verlaufen.

6. Handhabungssystem nach einem oder mehreren der vorhergehenden Ansprüche, gekennzeichnet durch mehrere, matrixförmig auf dem Werkstückträger verteilte Aufnahmen (31 - 38).

7. Handhabungssystem nach einem oder mehreren der vorhergehenden Ansprüche, dadurch gekennzeichnet, dass die Positionierungsmittel als an den Bewegungsachsen angeordneten Anschläge ausgebildet sind.

8. Handhabungssystem nach einem oder mehreren der vorhergehenden Ansprüche, gekennzeichnet durch mehrere, in einer Rundtaktanlage (50) um eine Transfereinrichtung angeordneten Handhabungsvorrichtungen (1), wobei die Transfereinrichtung als Schaltteller (51) ausgebildet ist.

9. Handhabungssystem nach einem oder mehreren der vorhergehenden Ansprüche, gekennzeichnet durch mehrere in einer Längstaktanlage entlang einer Transfereinrichtung angeordneten Handhabungsvorrichtungen (1).

10. Handhabungssystem nach Anspruch 8 oder 9, dadurch gekennzeichnet, dass durch die Transfereinrichtung die Werkstückträger (2) so positionierbar sind, dass sich der Referenzpunkt der Handhabungsvorrichtung (1) auf jeweils einer Referenzachse einer Aufnahme (31 - 38) befindet.

11. Handhabungssystem nach einem oder mehreren der vorhergehenden Ansprüche, dadurch gekennzeichnet, dass eine X-Achse pneumatisch angetrieben ist.

12. Handhabungssystem nach einem oder mehreren der vorhergehenden Ansprüche, dadurch gekennzeichnet, dass an den Aufnahmen (31 - 38) des Werkstückträgers (2) Einsätze (40 - 45) anbringbar sind, an welchen Werkstücke anordenbar sind.

13. Handhabungsvorrichtung, insbesondere eines Handhabungssystems nach einem oder mehreren der vorhergehenden Ansprüche, dadurch gekennzeichnet, dass die Handhabungsvorrichtung mit einem Aktuator zum Erfassen eines Werkstückes sowie mit mindestens zwei, vorzugsweise drei, mit einem Antrieb wirkverbundenen Bewegungsachsen versehen ist, wodurch der Aktuator in unterschiedlichen Positionen eines Koordinatensystems positionierbar ist,
die Handhabungsvorrichtung (1) dazu mit Positionierungsmitteln versehen ist, durch welche ein Referenzpunkt der jeweiligen Handhabungsvorrichtung (1) durch die Bewegungsachsen nur in unveränderlich fest vorgegebenen Positionen anordenbar ist,
zumindest einige Positionen jedes Aktuators jeweils eine Punktmatrix, vorzugsweise eine dreidimensionale Punktmatrix, bilden.

14. Handhabungsvorrichtung nach Anspruch 13, dadurch gekennzeichnet, dass eine der Bewegungsachsen ausser ihrem Antrieb zusätzlich mit einem Eindrückzylinder versehen ist, durch den ein am Aktuator angeordnetes Werkzeug entlang dieser Bewegungsachse in zwei Endlagen überführbar ist.

15. Handhabungsvorrichtung nach Anspruch 14, dadurch gekennzeichnet, dass der Eindrückzylinder in einer Endlage auf den auf einer Grundfläche (23) angeordneten Werkstückträger einwirkt und der Eindrückzylinder an einem Gestell der Handhabungsvorrichtung angeordnet ist, der sich ebenfalls auf der Grundfläche (23) abstützt, wodurch in dieser Endlage ein in sich geschlossener Kraftfluss erzielt wird.
